Europäisches Patentamt

European Patent Office

Office européen des brevets

(19)

(11) Veröffentlichungsnummer: **0 451 694 A2**

## (12) EUROPÄISCHE PATENTANMELDUNG

(21) Anmeldenummer: 91105300.7

(22) Anmeldetag: 04.04.91

(51) Int. Cl.⁵: **H04Q 7/04**, H04B 7/26, H04J 3/06

(30) Priorität: 07.04.90 DE 4011341

(43) Veröffentlichungstag der Anmeldung:
16.10.91 Patentblatt 91/42

(84) Benannte Vertragsstaaten:
AT BE CH DE ES FR GB IT LI NL SE

(71) Anmelder: Standard Elektrik Lorenz
Aktiengesellschaft
Lorenzstrasse 10
W-7000 Stuttgart 40(DE)
(84) DE

Anmelder: **ALCATEL N.V.**
**Strawinskylaan 341 (World Trade Center)**
**NL-1077 XX Amsterdam(NL)**
(84) **BE CH ES FR GB IT LI NL SE AT**

(72) Erfinder: **Höfgen, Günter, Dr.**
**Marderweg 8**
**W-7014 Kornwestheim(DE)**

(74) Vertreter: **Pohl, Heribert, Dipl.-Ing et al**
**Standard Elektrik Lorenz AG Patent- und**
**Lizenzwesen Postfach 30 09 29**
**W-7000 Stuttgart 30(DE)**

(54) Zeitmultiplex-Übertragungssystem.

(57) Es ist ein Zeitmultiplex-Übertragungssystem beschrieben, das Feststationen (FS) und Mobilstationen (MS) aufweist.

Die Mobilstationen (MS) enthalten Mittel zur Bestimmung ihres jeweiligen Standorts und der Entfernung zur Feststation (FS).

Abhängig von der Entfernung verschieben die Mobilstationen ihren Sendezeitpunkt so, daß die von ihr gesendeten Signale zum richtigen Zeitpunkt hinsichtlich des Zeitrahmens der Feststation (FS) bei dieser eintreffen.

EP 0 451 694 A2

Die Erfindung bezieht sich auf ein Zeitmultiplex-Übertragungssystem gemäß dem Oberbegriff des Anspruchs 1. Ein derartiges System ist aus der DE-OS 34 23 640 bekannt.

Beim sogenannten GSM-System, einem digitalen zellularen Mobiltelefonsystem (beschrieben in: Conference Proceedings, Digital Cellular Radio Conference, Hagen, Okt. 1988), das europaweit ab 1991 installiert werden soll, wird unterschieden zwischen dem Erstzugriff einer Mobilstation zu einer Feststation mit verkürzten Signalen (access bursts) und der zeitgeordneten Kommunikation auf Zeitschlitzen, die, von einer sehr kurzen Schutzzeit abgesehen, voll für die Signalübertragung genutzt werden (normal bursts). Der Erstzugriff erfolgt, wenn eine Mobilstation, nachdem sie sich auf den Zeitrahmen einer Feststation synchronisiert hat, eine Verbindung zu dieser Feststation aufbauen will. Das hierfür benützte Funksignal (access burst) ist so kurz bemessen, daß im Zeitschlitz noch eine Schutzzeit von 0,25 ms übrigbleibt, sodaß der Zugriff aus Entfernungen bis zu etwa 37 km Entfernung erfolgen kann. Bei dieser Maximalentfernung ist die doppelte Signallaufzeit gleich der Schutzzeit.

Die Feststation mißt die Signallaufzeit und sendet zur Mobilstation eine Nachricht, den Zeitrahmen um den Wert der Signallaufzeit vorzuverlegen, so daß während der anschließenden zeitgeordneten Kommunikation die Zeitschlitze voll genutzt werden können.

Für den Betrieb aus größeren Entfernungen ist das GSM-System nicht ausgelegt, weil der Aufwand steigen und der Ausnutzungsgrad wegen langer Schutzzeiten sinken würde.

Es ist Aufgabe der vorliegenden Erfindung, ein Zeitmultiplex-Übertragungssystem anzugeben, bei dem erheblich größere Signallaufzeiten zugelassen werden können, ohne deshalb die Schutzzeiten verlängern zu müssen.

Die Lösung dieser Aufgabe erfolgt durch die im Anspruch 1 genannten Mittel. In den Unteransprüchen werden Weiterbildungen des Übertragungssystems beansprucht.

Das erfindungsgemäße Übertragungssystem hat den Vorteil, daß es sehr kostengünstig realisiert werden kann, wenn der ortsfeste Teil des Systems (Feststationen, Vermittlungseinrichtungen, usw.) beispielsweise mit dem vom GSM-System oder einem anderen TDMA-System bekannten weitgehend identisch ist, und auch die Mobilstationen weitgehend mit den beim GSM-System üblichen baugleich, jedoch um Mittel zur Entfernungsbestimmung erweitert sind. Diese Erweiterung kann beispielsweise durch Kopplung mit einem handelsüblichen Navigationsgerät erreicht werden. Das neue Übertragungssystem ist daher insbesondere als Flugzeugtelefonsystem geeignet, da Flugzeuge ja sowieso mit Navigationssystemen ausgerüstet sind, die erfindungsgemäß mitbenutzt werden können.

Die Erfindung wird nachstehend anhand eines Ausführungsbeispiels erläutert.

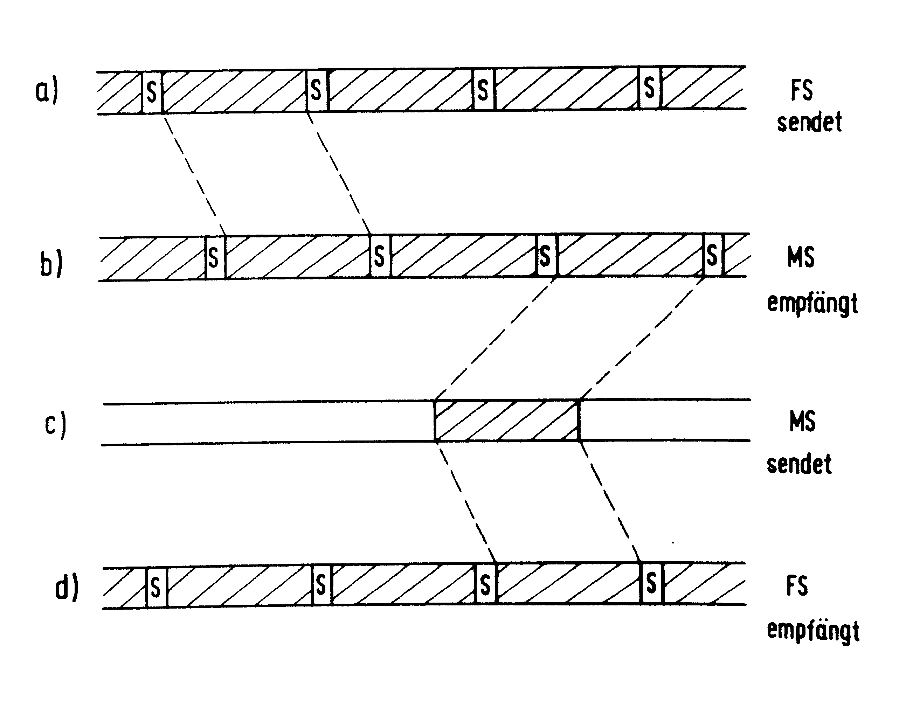

Die einzige Figur zeigt die relative zeitliche Lage der Zeitschlitze in der Mobil- und Feststation.

Das neue Zeitmultiplex-Übertragungssystem besteht aus mindestens einer Feststation und einer Mobilstation, die im Zeitmultiplex miteinander kommunizieren. Dabei gibt jede Feststation einen Zeitrahmen vor, der mehrere Zeitschlitze aufweist, die durch Schutzzeiten S voneinander getrennt sind. Die Schutzzeiten verhindern eine durch unterschiedliche Signallaufzeiten hervorgerufene zeitliche Überlappung der Sendungen verschiedener Mobilstationen, die in benachbarten Zeitschlitzen mit der Feststation kommunizieren, am Ort der Feststation. Innerhalb dieses Zeitrahmens sendet jede Feststation periodisch eine individuelle Kennung, die ihre Identifizierung ermöglicht, oder klare oder verschlüsselte Angaben über ihren geographischen Standort.

Die Mobilstation empfängt das Signal zumindest einer Feststation, synchronisiert sich auf den empfangenen Zeitrahmen und ermittelt den genauen geographischen Standort der Feststation. Dazu besitzt die Mobilstation einen Speicher, in dem die Standorte und Kennungen aller zu dem Übertragungssystem gehörenden Feststationen gespeichert sind, oder eine Auswerteschaltung für die von der Feststation gesendeten klaren oder verschlüsselten Angaben.

Ferner besitzt die Mobilstation Mittel zur Bestimmung ihres jeweiligen eigenen geographischen Standorts und zur Berechnung der Entfernung zur Feststation. Dazu besitzt die Mobilstation beispielsweise einen GPS (Global Positioning System)-Empfänger oder andere geeignete Navigationsmittel. Da die Signallaufzeit proportional zur Entfernung ist, ermittelt die Mobilstation aus der Entfernung den Zeitversatz, um den sie den Beginn ihrer Sendung vorverlegen muß, damit ihre Sendung in zeitlich richtiger Lage bezüglich des Zeitrahmens der Feststation bei dieser eintrifft.

Dieser Sachverhalt ist durch die einzige Figur schematisch dargestellt, die unter a) und d) einen Ausschnitt aus dem Zeitrahmen der Feststation zeigt. Es sind dort schraffiert die Zeitschlitze und nicht schraffiert die Schutzzeiten S dargestellt.

Aufgrund der Signallaufzeit ist der Zeitrahmen der Mobilstation um einen bestimmten Betrag gegenüber dem Zeitrahmen der Feststation verschoben. Dies ist unter b) dargestellt. Die Größe der Verschiebung ist im allgemeinen zeitlich veränderlich, entsprechend der Bewegung der Mobilstation und sich ändernder Ausbreitungsbedingungen der Funksignale.

Unter c) ist dargestellt, daß die Mobilstation zu einem früheren Zeitpunkt als durch ihren unter b) dargestellten Zeitrahmen bedingt mit dem Senden beginnt, so daß die gesendeten Signale hinreichend synchron mit dem Zeitrahmen der Feststation bei dieser ankommen.

Bei einer anderen Ausführung des Zeitmultiplex-Übertragungssystems besitzen die Feststationen zusätzlich Einrichtungen zur genauen Bestimmung der zeitlichen Lage des von der Mobilstation gesendeten Signals bezüglich des Zeitrahmens der Feststation und senden, wie in der DE-OS 34 23 640 beschrieben, ein Steuersignal zur Feineinstellung des Sendezeitpunktes der Mobilstation, die daraufhin ihren Sendezeitpunkt entsprechend verschiebt.

**Patentansprüche**

1. Zeitmultiplex-Übertragungssystem mit mindestens einer Mobilstation und mindestens einer Feststation, die einen Zeitrahmen vorgibt, der mehrere durch Schutzzeiten voneinander getrennte Zeitschlitze enthält, wobei die Mobilstation ihren Sendezeitrahmen abhängig von der Entfernung zur Feststation so einstellt, daß von ihr gesendete Informationen in zeitlich richtiger Lage bezüglich des Zeitrahmens der Feststation bei dieser eintreffen, **dadurch gekennzeichnet,** daß die Mobilstation (MS) Mittel zur Bestimmung der Entfernung zur Feststation (FS) enthält.

2. Zeitmultiplex-Übertragungssystem nach Anspruch 1, dadurch gekennzeichnet, daß die Mobilstation (MS) Navigationsmittel zur Bestimmung des eigenen Standorts enthält, daß jede Feststation (FS) eine individuelle Kennung oder andere Angaben über ihren Standort sendet und daß daraus die Mobilstation (MS) die Entfernung zur Feststation (FS) berechnet.

3. Zeitmultiplex-Übertragungssystem nach Anspruch 1 oder 2, dadurch gekennzeichnet, daß die Feststation zusätzlich Einrichtungen zur genauen Bestimmung der zeitliche Lage des von der Mobilstation gesendeten Signals bezüglich des Zeitrahmens der Feststation enthält und ein Steuersignal zur Feineinstellung des Sendezeitpunktes der Mobilstation sendet und daß die Mobilstation Einrichtungen zur Auswertung des Steuersignals enthält und ihren Sendezeitpunkt entsprechend verschiebt.

a) FS
   sendet

b) MS
   empfängt

c) MS
   sendet

d) FS
   empfängt

EP 0 451 694 A2